(19) Europäisches Patentamt
European Patent Office
Office européen des brevets

(11) **EP 2 534 449 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(21) Anmeldenummer: **11705441.1**

(22) Anmeldetag: **10.02.2011**

(51) Int Cl.:
**G01D 5/14** (2006.01) **G01R 33/02** (2006.01)

(86) Internationale Anmeldenummer:
**PCT/EP2011/000624**

(87) Internationale Veröffentlichungsnummer:
**WO 2011/098274 (18.08.2011 Gazette 2011/33)**

(54) **VERFAHREN ZUR POSITIONSMESSUNG**

METHOD FOR MEASURING A POSITION

PROCÉDÉ DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2010 DE 102010007915**

(43) Veröffentlichungstag der Anmeldung:
**19.12.2012 Patentblatt 2012/51**

(73) Patentinhaber: **Marquardt Mechatronik GmbH 78604 Rietheim-Weilheim (DE)**

(72) Erfinder:
• **ALLMENDINGER, Frank 70327 Stuttgart (DE)**

• **BINDER, Eberhard 71254 Schoeckingen (DE)**

(74) Vertreter: **Otten, Roth, Dobler & Partner mbB Patentanwälte Großtobeler Straße 39 88276 Berg / Ravensburg (DE)**

(56) Entgegenhaltungen:
**DE-A1-102005 009 381    DE-A1-102007 008 155 DE-A1-102008 024 103    US-A1- 2007 167 703 US-A1- 2009 217 711**

EP 2 534 449 B1

**Beschreibung**

Die Erfindung betrifft ein Verfahren zur Positionsmessung nach dem Oberbegriff des Patentanspruchs 1 sowie eine diesbezügliche Vorrichtung nach dem Oberbegriff des Patentanspruchs 9.

Ein derartiges Verfahren kann als Auswerteverfahren zur dreidimensionalen Positionsbestimmung in einem magnetisch arbeitenden Positionssensor zur Anwendung kommen.

Aus der DE 10 2008 024 103 A1 ist eine Vorrichtung zur Positionsmessung mit einem Magneten und mit einem die Magnetfeldstärke des Magneten detektierenden Sensor bekannt, wobei der Magnet und/oder der Sensor mit einem beweglichen Element zusammenwirkt. Mittels des beweglichen Elementes ist eine Relativbewegung zwischen dem Sensor und dem Magneten bewirkbar, derart dass die Position des beweglichen Elementes entsprechend den Koordinaten (x, y, z) in einem Koordinatensystem aufgrund des vom Sensor detektierten, vom Magneten erzeugten Magnetfelds feststellbar ist. Hierfür stellt der Sensor die im Sensor an einem beziehungsweise am selben Ort wirkenden Komponenten der Magnetfeldstärke ($B_x$, $B_y$, $B_z$) des Magnetfeldes in drei, linear unabhängigen Raumrichtungen fest. Der Magnet ist so gewählt, dass dieser ein analytisch beschreibbares Magnetfeld erzeugt.

Aus dem Stand der Technik sind weiterhin die Dokumente DE 10 2005 009 381 A1, DE 10 2007 008 155 A1, US 2009/0217711 A1 und US 2007/0167703 A1 bekannt. Diese Dokumente lehren jedoch keine analytischen Positionsbestimmungsverfahren, welche den Fachmann entsprechend der vorliegenden Erfindung anleiten.

Der Erfindung liegt die Aufgabe zugrunde, ein Verfahren zur Positionsmessung für eine solche Vorrichtung zu schaffen, das in einfacher Art und Weise arbeitet.

Diese Aufgabe wird bei einem gattungsgemäßen Verfahren durch die kennzeichnenden Merkmale des Anspruchs 1 sowie bei einer diesbezüglichen Vorrichtung durch die kennzeichnenden Merkmale des Patentanspruchs 10 gelöst.

Beim erfindungsgemäßen Verfahren wird jede Koordinate x, y, z entlang einer Koordinatenachse des Koordinatensystems in einem Halbraum des Magnetfelds einzeln und eindeutig durch die Kombination der von dem Sensor erfassten Komponenten der Magnetfeldstärke ($B_x$, $B_y$, $B_z$) in allen Raumrichtungen des Koordinatensystems ermittelt. Zur jeweiligen Positionsbestimmung genügt somit die Messung der Komponenten der Magnetfeldstärken $B_x$, $B_y$, $B_z$ am dem einen Ort im Sensor, also lediglich die Messung eines Werte-Tripels, aus dem dann in einfacher Art und Weise die Koordinaten x, y, z für die räumliche Position berechenbar sind.

Das Verfahren ist dahingehend weiterentwickelt, dass die Koordinaten x, y, z aus einer Quotientenbeziehung zwischen der jeweiligen der Koordinatenachse entsprechenden Magnetfeldstärke ($B_x$, $B_y$, $B_z$), einer von dem Ort abhängigen Magnetfeldgröße $B_0$ und einer konstanten Systemgröße beschrieben werden. Dabei umfasst die Systemgröße die magnetische Permeabilitätskonstante und das Dipolmoment des Magneten. Die Magnetfeldgröße $B_0$ umfasst wiederum eine Komponente ($B_x$, $B_y$, $B_z$) in einer Raumrichtung und den Betrag der Magnetfeldstärke. Da es sich hierbei lediglich um einfache Rechenschritte handelt, genügt für deren Berechnung ein kostengünstiger Mikroprozessor mit geringer Leistung.

Insbesondere werden dabei die Koordinaten wie folgt ermittelt:

$$x = \frac{\sqrt[3]{\dfrac{M_0}{B_0}}^2}{\sqrt[3]{\dfrac{M_0}{B_0}}\sqrt{\dfrac{1}{3}\left(\dfrac{B_z}{B_0}+1\right)}}\,\frac{1}{3}\frac{B_x}{B_0}$$

$$y = \frac{\sqrt[3]{\dfrac{M_0}{B_0}}^2}{\sqrt[3]{\dfrac{M_0}{B_0}}\sqrt{\dfrac{1}{3}\left(\dfrac{B_z}{B_0}+1\right)}}\,\frac{1}{3}\frac{B_y}{B_0}$$

$$z = \sqrt[3]{\dfrac{M_0}{B_0}}\sqrt{\dfrac{1}{3}\left(\dfrac{B_z}{B_0}+1\right)}$$

wobei

$$B_0 = \frac{-B_z + \sqrt{B_z^2 + 8B^2}}{4} \qquad B^2 = B_x{}^2 + B_y{}^2 + B_z{}^2 \qquad M_0 = \frac{\mu_0 p_z}{4\pi}$$

und wobei $p_z$ das Dipolmoment des Magneten sowie $\mu_0$ die Permeabilitätskonstante bedeuten.

Es ist somit festzustellen, dass das erfindungsgemäße Verfahren nur geringen apparativen Aufwand erfordert und sehr schnell arbeitet. Weitere Ausgestaltungen der Erfindung sind Gegenstand der Unteransprüche.

Das Verfahren zur Positonsbestimmung lässt sich weiter vereinfachen, indem als analytisch beschreibbares Magnetfeld ein im Wesentlichen ideales Dipolfeld verwendet wird. Bevorzugterweise ist hierfür ein Feld eines Zylindermagneten mit einem Verhältnis von Durchmesser zu Zylinderhöhe von in etwa 1:1 vorgesehen, da ein solcher Zylindermagnet einfach und kostengünstig herstellbar ist. Als Dipolfeld lässt sich jedoch auch das Feld eines Kugelmagneten verwenden.

In manchen Geräten, in denen die magnetisch arbeitende Vorrichtung zur Positionsmessung eingesetzt wird, können Störungen des Magnetfeldes aufgrund der Einbausituation im Gerät hervorgerufen werden. In derartigen Anwendungsfällen erzeugt der Magnet somit ein Magnetfeld, welches zumindest an einer, nicht zwischen dem Sensor und dem Magneten befindlichen Fläche verzerrt wird. Insbesondere kann eine solche Fläche, beispielsweise eine metallische Fläche im Gerät, eine Abschirmung des Magnetfeldes bewirken. Um auch in solchen Fällen eine korrekte Positionsbestimmung zu gewährleisten, lässt sich das Verfahren zur Positionsmessung wie folgt ausgestalten. In einem ersten Schritt wird jede Koordinate x, y, z entlang einer Koordinatenachse des Koordinatensystems in einem Halbraum eines unverzerrten Magnetfelds zu einem Anfangswert festgesetzt. In einem zweiten Schritt wird ein Magnetfeldmodell aus einer in Bezug zu der die Verzerrung bewirkenden Fläche flächensymmetrischen, insbesondere spiegelartigen, Anordnung von mindestens zwei unverzerrten Magnetfeldern beschrieben. In einem dritten Schritt wird schließlich eine Positionsbestimmung im Magnetfeldmodell, ausgehend vom Anfangswert durch iterative Kombination der von dem Sensor erfassten Komponenten der Magnetfeldstärke ($B_x$, $B_y$, $B_z$) in allen Raumrichtungen des Koordinatensystems und des Magnetfeldmodells ermittelt. Auch hier ist festzustellen, dass dieses Verfahren in einfacher und schneller Art und Weise die Positionsbestimmung ermöglicht.

Zweckmäßigerweise wird die Festsetzung jeder Koordinate x, y, z entlang einer Koordinatenachse in einem Halbraum eines unverzerrten Magnetfelds zu einem Anfangswert nach dem oben beschriebenen Verfahren für ein ungestörtes Magnetfeld ermittelt. Es kann im einfachen Falle jedoch auch genügen, dass die Festsetzung jeder Koordinate x, y, z entlang einer Koordinatenachse in einem Halbraum eines unverzerrten Magnetfelds zu einem Anfangswert frei gewählt wird.

In weiterer Ausgestaltung, die sich durch eine einfache Auswertung im Hinblick auf die Positionsbestimmung auszeichnet, kann das Magnetfeldmodell als ein spiegelsymmetrisches Magnetfeld zweier im wesentlichen idealer Dipolfelder, gespiegelt an der mindestens einen die Verzerrung bewirkenden Fläche und einseitig polinvertiert gewählt werden. Es bietet sich weiterhin an, dass das Magnetfeldmodell eine Flächenkonstante zur Berücksichtigung von Grenzflächeneffekten der mindestens einen die Verzerrung bewirkenden Fläche umfasst. Beispielsweise berücksichtigt die Flächenkonstante eine in der Realität häufig vorliegende, nicht ideale und somit unvollständige Abschirmung des Magnetfeldes durch eine Metallfläche.

Insbesondere kann Magnetfeldmodell wie folgt bestimmt sein:

$$\vec{B} = \begin{pmatrix} B_x \\ B_y \\ B_z \end{pmatrix} = \frac{\mu_0}{4\pi} \frac{3(\vec{p}\cdot\vec{r})\vec{r} - r^2\vec{p}}{r^5} + \eta \frac{\mu_0}{4\pi} \frac{3(\vec{p}\cdot\vec{r}_S)\vec{r}_S - r_s^2\vec{p}}{r_s^5}$$

wobei r = (x y z) der Positionsvektor für den Magneten, $r_s$ = ($x_s$ $y_s$ $z_s$) der Positionsvektor für den Spiegelmagneten sowie $\eta$ die effektiv wirksame Permeabilität der die Verzerrung bewirkenden Fläche und des dahinter liegenden Halbraumes bedeuten.

Eine nach dem erfindungsgemäßen Verfahren arbeitende Positionsmesseinrichtung lässt sich vorteilhafterweise in einer Vorrichtung mit einem Metallgehäuse einsetzen. Beispielsweise kann es sich dabei um ein Wäschebehandlungsgerät handeln. Das Gerät besitzt ein Gehäuse, das insbesondere wenigstens teilweise aus Metall besteht, und eine im Gehäuse aufgehängte drehbare Trommel. Die relative Position der Trommel im Gehäuse wird dann durch eines der oben beschriebenen Verfahren ermittelt. Beispielsweise kann in einer Waschmaschine die Positionsmessung zur Beladungserkennung der Wäschetrommel und/oder zur Detektierung des Schwingungsverhaltens der Wäschetrommel dienen. Vorteilhafterweise sind dann größere Trommeln mit einem Fassungsvermögen von 7 oder 8 kg Wäsche in einem Waschmaschinengehäuse mit einer Standardbreite von 60 cm realisierbar. Dies wird dadurch ermöglicht, indem die Position der Trommel zum Gehäuse gemessen werden kann. Basierend auf diesem Signal kann die Waschmaschinensteuerung drohende Anschläge der Trommel an das Gehäuse erkennen und entsprechend reagieren.

Die mit der Erfindung erzielten Vorteile bestehen insbesondere darin, daß die Positionsmessung aufgrund des einfachen Auswerteverfahrens mit geringem Aufwand und kostengünstig zu realisieren ist. Daher ist die Positionsmessung in kostensensitiven Massenartikeln, wie Haushaltsgeräten, Elektrowerkzeugen o. dgl., einsetzbar. Dennoch arbeitet die Positionsmessung sehr genau, und zwar präziser als bisher, sowie auch empfindlich, so dass diese auch in sicherheitskritischen Anwendungen, beispielsweise in Kraftfahrzeugen, verwendbar ist. Schließlich handelt es sich auch um ein schnelleres Auswerteverfahren als bisher.

Ausführungsbeispiele der Erfindung mit verschiedenen Weiterbildungen und Ausgestaltungen sind in den Zeichnungen dargestellt und werden im folgenden näher beschrieben. Es zeigen

Fig. 1     schematisch eine einen Magneten sowie einen Sensor aufweisende Positionsmessvorrichtung in der Art einer Prinzipskizze,

Fig. 2     schematisch eine Waschmaschine mit einer einen Magneten sowie einen Sensor aufweisenden Positionsmessvorrichtung,

Fig. 3     ein von einer metallischen Fläche verzerrtes Magnetfeld und

Fig. 4     ein die Verzerrung an einer metallischen Fläche berücksichtigendes Magnetfeldmodell.

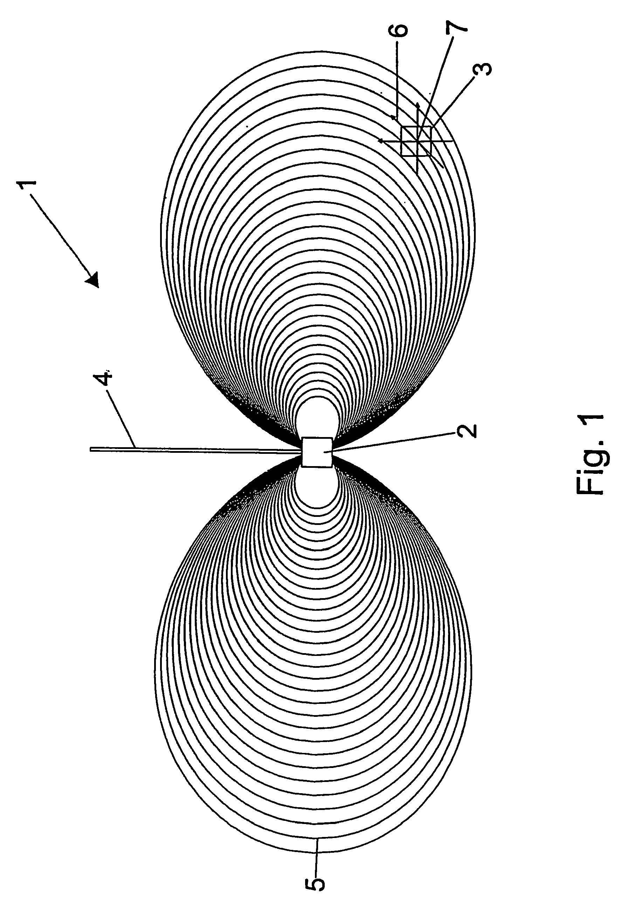

In der als Prinzipskizze dienenden Fig. 1 ist eine Positionsmessvorrichtung 1 gezeigt, die einen Magneten 2 und einen die Magnetfeldstärke des Magneten 2 detektierenden Sensor 3 umfasst. Der Magnet 2 und/oder der Sensor 3 wirkt mit einem lediglich schematisch gezeichneten, beweglichen Element 4 zusammen, so dass mittels des beweglichen Elementes 4 somit eine Relativbewegung zwischen dem Sensor 3 und dem Magnet 2 bewirkt werden kann. Vorliegend ist der Magnet 2 an dem beweglichen Element 4 angeordnet, während der Sensor 3 ortsfest angeordnet ist. Selbstverständlich kann auch umgekehrt der Sensor 3 am beweglichen Element 4 sowie der Magnet 2 ortsfest angeordnet sein, was jedoch nicht weiter betrachtet ist. Der Magnet 2 ist so ausgestaltet, dass dieser ein analytisch beschreibbares Magnetfeld 5 erzeugt. Wie anhand der in Fig. 1 eingezeichneten Feldlinien des Magnetfeldes 5 zu erkennen ist handelt es sich dabei um ein im Wesentlichen ideales Dipolfeld, wobei das Dipol-Magnetfeld 5 von einem Zylindermagneten 2 mit einem Verhältnis von Durchmesser zu Zylinderhöhe von in etwa 1:1 erzeugt wird. Das Dipol-Magnetfeld 5 lässt sich auch mittels eines Kugelmagneten erzeugen, was jedoch nicht weiter gezeigt ist.

Die Position des beweglichen Elementes 4 entsprechend den Koordinaten x, y, z in einem Koordinatensystem, bei dem es sich vorliegend um ein kartesisches Koordinatensystem handelt, ist aufgrund des vom Sensor 3 detektierten, vom Magneten 2 erzeugten Magnetfeldes 5 feststellbar. Hierzu arbeitet die Positionsmessvorrichtung 1 nach folgendem Verfahren zur Positionsmessung.

Zunächst werden im Sensor 3 die in einem einzigen sensitiven Punkt 7 und folglich an dem einen, selben Ort 7 wirkenden Komponenten der Magnetfeldstärke des Magnetfeldes 5 in drei linear unabhängige Raumrichtungen 6, die sogenannten B-Feld-Komponenten $B_x$, $B_y$, $B_z$ festgestellt, wie in Fig. 1 schematisch angedeutet ist. Jede Koordinate x, y, z entlang einer Koordinatenachse des Koordinatensystems wird in einem Halbraum des Magnetfelds 5, wobei es sich vorliegend in der Fig. 1 um den rechts vom Magneten 2 liegenden Halbraum handelt, einzeln und eindeutig durch die Kombination der von dem Sensor 3 erfassten Komponenten der Magnetfeldstärke $B_x$, $B_y$, $B_z$ in allen Raumrichtungen 6 des Koordinatensystems ermittelt. Zur Bestimmung der Koordinaten x, y, z dient eine Quotientenbeziehung zwischen der jeweiligen der Koordinatenachse entsprechenden Magnetfeldstärke $B_x$, $B_y$, $B_z$, einer von dem Ort abhängigen Magnetfeldgröße $B_0$ und einer konstanten Systemgröße. Die Systemgröße umfasst die magnetische Permeabilitätskonstante bzw. die magnetische Feldkonstante $\mu_0$ und das Dipolmoment $p_z$ des Magneten 2. Die Magnetfeldgröße $B_0$ umfasst eine Komponente $B_x$, $B_y$, $B_z$ in einer Raumrichtung 6 und den Betrag der Magnetfeldstärke B. Insbesondere können die Koordinaten x, y, z mit Hilfe der Quotientenbeziehung wie folgt ermittelt werden:

$$x = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}}\frac{1}{3}\frac{B_x}{B_0} \qquad y = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}}\frac{1}{3}\frac{B_y}{B_0} \qquad z = \sqrt[3]{\frac{M_0}{B_0}}\sqrt{\frac{1}{3}\left(\frac{B_z}{B_0}+1\right)}$$

wobei

$$B_0 = \frac{-B_z + \sqrt{B_z^2 + 8B^2}}{4} \quad \text{und} \qquad B^2 = B_x^2 + B_y^2 + B_z^2 \quad \text{sowie} \qquad M_0 = \frac{\mu_0 p_z}{4\pi}$$

bedeuten. Durch entsprechendes Umformen können die Formeln zur Bestimmung der Koordinaten noch wie folgt vereinfacht werden:

$$x = \frac{\sqrt[3]{\dfrac{M_0}{B_0}}}{\sqrt{\dfrac{1}{27}\left(\dfrac{B_z}{B_0} + 1\right)}} \frac{B_x}{B_0} \qquad\qquad (1^*)$$

$$y = \frac{\sqrt[3]{\dfrac{M_0}{B_0}}}{\sqrt{\dfrac{1}{27}\left(\dfrac{B_z}{B_0} + 1\right)}} \frac{B_y}{B_0} \qquad\qquad (2^*)$$

$$z = \sqrt[3]{\dfrac{M_0}{B_0}} \cdot \sqrt{\dfrac{1}{3}\left(\dfrac{B_z}{B_0} + 1\right)} \qquad\qquad (3^*)$$

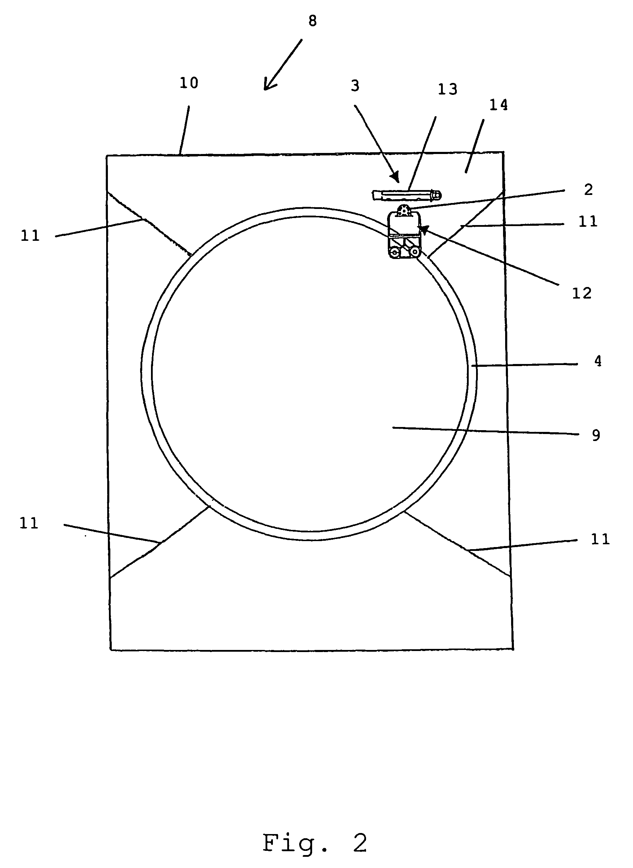

In Fig. 2 ist die Verwendung der Positionsmessvorrichtung 1 in einem Haushaltsgerät, und zwar in einem lediglich schematisch skizzierten Wäschebehandlungsgerät, beispielsweise einer Waschmaschine 8 mit einem Gehäuse 10, gezeigt. Die Waschmaschine 8 besitzt eine Waschtrommel 9, die drehbar an einer Lageranordnung 4 gelagert ist. Die Lageranordnung 4 ist ihrerseits über Aufhängungen 11 so in der Waschmaschine 8 befestigt, dass Schwingungen, Bewegungen o. dgl. der Trommel 9 auf die Lageranordnung 4 übertragen werden. Die Lageranordnung 4 stellt somit das bewegliche Element dar, mit der der Magnet 2 zusammenwirkt. Hierfür ist der Magnet 2 in einer am beweglichen Element 4 befestigten Halterung 12 angeordnet. Der Sensor 3 besitzt ein Sensorgehäuse 13, das in der Nähe der Halterung 12 und dem Magneten 2 zugeordnet an einem gegenüber dem beweglichen Element 4 feststehenden Element in der Waschmaschine 9, und zwar an der Gehäuserückwand 14 des Gehäuses 10 fixiert ist. Die von der Positionsmessvorrichtung 1 ermittelten Koordinaten x, y, z der Trommel 9 werden zu einem Mikrocomputer in der Waschmaschine 8 übertragen, wo anhand entsprechender Ansteuerung des Antriebs für die Waschtrommel 9 dann Schwingungen, Resonanzen o. dgl. ausgeglichen werden.

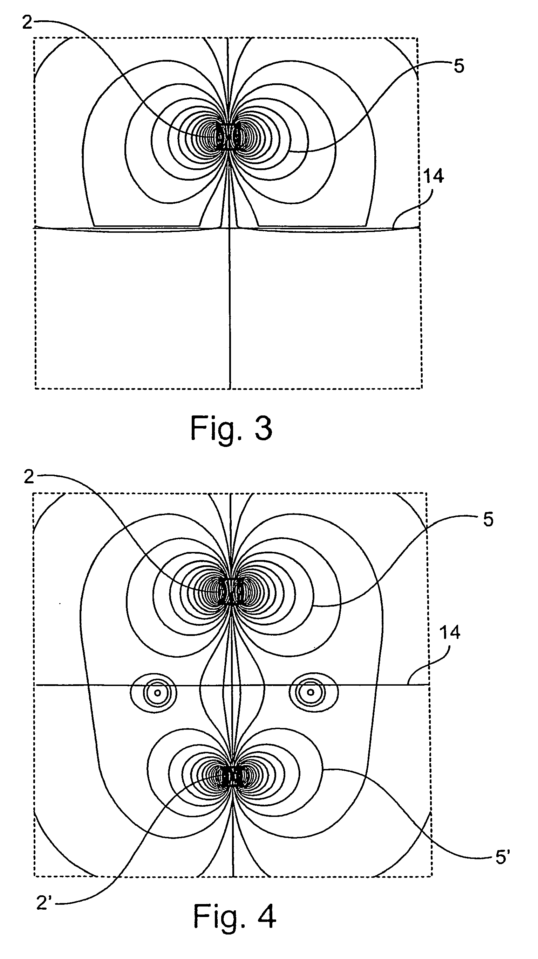

Das Gehäuse 10 der Waschmaschine 8 besteht aus einem Metallgehäuse. Metall bewirkt jedoch eine Veränderung des Magnetfeldes 5 in der Art einer Abschirmung. Da sich der Sensor 3 in der Nähe der metallischen Gehäuserückwand 14 befindet, wird das vom Magneten 2 erzeugte Magnetfeld 5 an dieser zumindest einen, nicht zwischen dem Sensor 3 und dem Magneten 2 befindlichen Fläche 14 verzerrt, indem die Feldlinie des Magneten 2 an der Fläche 14 derart abgelenkt werden, dass diese weitgehend in der Fläche 14 verlaufen, wie schematisch in Fig. 3 zu sehen ist. Um diesen Effekt zu berücksichtigen, wird das Verfahren zur Positionsmessung mit dem Magneten 2 und mit dem die Magnetfeldstärke detektierenden Sensor 3, also die Ermittlung der relativen Position der Trommel 9 im Gehäuse 10, wie folgt erweitert.

In einem ersten Schritt wird jede Koordinate x, y, z entlang einer Koordinatenachse 6 des Koordinatensystems in einem Halbraum eines unverzerrten Magnetfelds 5 zu einem Anfangswert $x_0$, $y_0$, $z_0$ festgesetzt. Bevorzugterweise erfolgt die Festsetzung jeder Koordinate x, y, z entlang einer Koordinatenachse 6 in dem Halbraum eines unverzerrten Magnetfelds 5 zu einem Anfangswert $x_0$, $y_0$, $z_0$ nach den obigen Formeln (1*), (2*) und (3*) entsprechend dem Verfahren zur Positionsbestimmung für ein ungestörtes Magnetfeld 5. Andererseits ist es auch möglich, die Festsetzung jeder Koordinate x, y, z entlang einer Koordinatenachse 6 in dem Halbraum eines unverzerrten Magnetfelds 5 zu einem Anfangswert $x_0$, $y_0$, $z_0$ in geeigneter Weise frei zu wählen.

In einem zweiten Schritt wird ein Magnetfeldmodell aus einer in Bezug zu der die Verzerrung bewirkenden Fläche 14 flächensymmetrischen, insbesondere spiegelartigen, Anordnung von mindestens zwei unverzerrten Magnetfeldern 5, 5' beschrieben, wie in Fig. 4 gezeigt ist. Zweckmäßigerweise enthält dieses Magnetfeldmodell ein spiegelsymmetrisches Magnetfeld 5, 5', wobei das Magnetfeld 5 vom Magneten 2 und das Magnetfeld 5' von einem gleichartigen Spiegelmagneten 2' bezüglich der Fläche 14 erzeugt wird. Bei den in Fig. 4 gezeigten Magnetfeldern 5, 5' handelt es sich somit um zwei im wesentlichen ideale Dipolfelder, die an der mindestens einen die Verzerrung bewirkenden Fläche 14 gespiegelt und einseitig polinvertiert sind. Das Magnetfeldmodell kann noch eine Flächenkonstante $\eta$ umfassen, die zur Berücksichtigung von Grenzflächeneffekten der mindestens einen die Verzerrung bewirkenden Fläche 14 dient. Die Flächekonstante $\eta$ berücksichtigt beispielsweise, dass das reale Metall der Gehäuserückwand 14 kein idealer "magnetischer Leiter" ist. Mit anderen Worten wird berücksichtigt, dass im realen Fall der Gehäuserückwand 14 ein gewisser Anteil der magnetischen Feldlinien auch außerhalb der Gehäuserückwand 14 verläuft, womit $\eta$ die effektiv wirksame Permeabilität der Gehäuserückwand darstellt.

In einem dritten Schritt erfolgt schließlich die eigentliche Positionsbestimmung in diesem Magnetfeldmodell. Diese wird ausgehend vom Anfangswert $x_0$, $y_0$, $z_0$ durch iterative Kombination der von dem Sensor 3 erfassten Komponenten der Magnetfeldstärke $B_x$, $B_y$, $B_z$ in allen Raumrichtungen 6 des Koordinatensystems und des Magnetfeldmodells ermittelt. Mit anderen Worten wird zunächst der Anfangswert $x_0$, $y_0$, $z_0$ in das Magnetfeldmodell eingesetzt und daraus ein erster Näherungswert $x_1$, $y_1$, $z_1$ ermittelt. Dieser erste Näherungswert wird anschließend wiederum in das Magnetfeldmodell eingesetzt und daraus ein zweiter Näherungswert $x_2$, $y_2$, $z_2$ ermittelt. Die Iteration wird nun solange fortgesetzt bis zwei aufeinanderfolgende Näherungswerte $x_{n-1}$, $y_{n-1}$, $z_{n-1}$ und $x_n$, $y_n$, $z_n$ für die Position in etwa gleich sind, also beispielsweise bis

$$\left| x_{n-1} - x_n \right| \leq \varepsilon$$

$$\left| y_{n-1} - y_n \right| \leq \varepsilon$$

$$\left| z_{n-1} - z_n \right| \leq \varepsilon$$

gilt, wobei $\varepsilon$ eine vorgegebene, die gewünschte Genauigkeit des Auswerteverfahrens bestimmende Schranke ist.

Insbesondere lässt sich das Magnetfeldmodell, bestehend aus der Anordnung von Magnet 2 und Spiegelmagnet 2' gemäß Fig. 4, wie folgt bestimmen:

$$\vec{B} = \begin{pmatrix} B_x \\ B_y \\ B_z \end{pmatrix} = \frac{\mu_0}{4\pi} \frac{3(\vec{p} \cdot \vec{r})\vec{r} - r^2 \vec{p}}{r^5} + \eta \frac{\mu_0}{4\pi} \frac{3(\vec{p} \cdot \vec{r}_s)\vec{r}_s - r_s^2 \vec{p}}{r_s^5}$$

Dabei bedeuten r = (x y z) der Positionsvektor für den Magneten 2, $r_s$ = ($x_s$ $y_s$ $z_s$) der Positionsvektor für den Spiegelmagneten 2' sowie $\eta$ die effektiv wirksame Permeabilität der die Verzerrung bewirkenden Fläche 14 und des dahinter liegenden Halbraumes. Wie sich herausgestellt hat, beträgt bei den üblichen Materialien für die Gehäuserückwand 14 in einer Waschmaschine 8 der Wert für $\eta$ in etwa 0,7.

Die Erfindung ist nicht auf die beschriebenen und dargestellten Ausführungsbeispiele beschränkt. So kann das Verfahren zur Positionsmessung außer in sonstigen Haushaltsgeräten auch in Kraftfahrzeugen, beispielsweise in Kraftfahrzeugschlössern, zur Fahrwerkserkennung, für Multimedia-Bedienelemente o. dgl. Verwendung finden. Darüber hinaus bietet dieses Messverfahren viele weitere Einsatzmöglichkeiten für die allgemeine Positionserkennung in der Produktions- und Automatisierungstechnik.

Bezugszeichen-Liste:

1: Positionsmessvorrichtung
2: Magnet / Zylindermagnet
2': Spiegelmagnet

3:     Sensor
4:     bewegliches Element / Lageranordnung
5:     Magnetfeld / Dipol-Magnetfeld / Dipolfeld
5':    (spiegelsymmetrisches) Magnetfeld / Dipolfeld
6:     Raumrichtung / Koordinatenachse
7:     Ort (im Sensor) /sensitiver Punkt
8:     Waschmaschine
9:     Waschtrommel / Trommel
10:    Gehäuse (von Waschmaschine)
11:    Aufhängung
12:    Halterung (für Magnet)
13:    Sensorgehäuse
14:    Gehäuserückwand / Fläche

**Patentansprüche**

1. Verfahren zur Positionsmessung mit einem Magneten (2) und mit einem die Magnetfeldstärke des Magneten (2) detektierenden Sensor (3), wobei der Magnet (2) und/oder der Sensor (3) mit einem beweglichen Element (4) zusammenwirkt, wobei mittels des beweglichen Elementes (4) eine Relativbewegung zwischen dem Sensor (3) und dem Magneten (2) bewirkbar ist, derart dass die Position des beweglichen Elementes (4) entsprechend den Koordinaten (x, y, z) in einem Koordinatensystem aufgrund des vom Sensor (3) detektierten, vom Magneten (2) erzeugten Magnetfelds (5) feststellbar ist, wobei der Magnet (2) ein analytisch beschreibbares Magnetfeld (5) erzeugt, und wobei der Sensor (3) die im Sensor (3) an einem Ort (7) wirkenden Komponenten der Magnetfeldstärke $(B_x, B_y, B_z)$ des Magnetfeldes (5) in drei, linear unabhängigen Raumrichtungen (6) feststellt, wobei jede Koordinate x, y, z entlang einer Koordinatenachse (6) des Koordinatensystems in einem Halbraum des Magnetfelds (5) einzeln und eindeutig durch die Kombination der von dem Sensor (3) erfassten Komponenten der Magnetfeldstärke $(B_x, B_y, B_z)$ in allen Raumrichtungen (6) des Koordinatensystems ermittelt wird **dadurch gekennzeichnet, dass** die Koordinaten (x, y, z) aus einer Quotientenbeziehung zwischen der jeweiligen der Koordinatenachse (6) entsprechenden Magnetfeldstärke $(B_x, B_y, B_z)$, einer von dem Ort abhängigen Magnetfeldgröße $B_0$ und einer konstanten Systemgröße, beschrieben werden, wobei die Systemgröße die magnetische Permeabilitätskonstante und das Dipolmoment des Magneten (2) umfasst sowie die Magnetfeldgröße $B_0$ eine Komponente $(B_x, B_y, B_z)$ in einer Raumrichtung (6) und den Betrag der Magnetfeldstärke umfasst, indem die Koordinaten wie folgt ermittelt werden:

$$x = \frac{\sqrt[3]{\sqrt{\dfrac{M_0}{B_0}}^{\,2}}}{\sqrt[3]{\sqrt{\dfrac{M_0}{B_0}}}\sqrt{\dfrac{1}{3}\left(\dfrac{B_z}{B_0}+1\right)}}\frac{1}{3}\frac{B_x}{B_0} \qquad y = \frac{\sqrt[3]{\sqrt{\dfrac{M_0}{B_0}}^{\,2}}}{\sqrt[3]{\sqrt{\dfrac{M_0}{B_0}}}\sqrt{\dfrac{1}{3}\left(\dfrac{B_z}{B_0}+1\right)}}\frac{1}{3}\frac{B_y}{B_0} \qquad z = \sqrt[3]{\sqrt{\dfrac{M_0}{B_0}}}\sqrt{\dfrac{1}{3}\left(\dfrac{B_z}{B_0}+1\right)}$$

wobei

$$B_0 = \frac{-B_z + \sqrt{B_z^2 + 8B^2}}{4} \qquad\qquad B^2 = B_x^{\,2} + B_y^{\,2} + B_z^{\,2} \qquad\qquad M_0 = \frac{\mu_0 p_z}{4\pi}$$

und wobei $p_z$ das Dipolmoment des Magneten (2) sowie $\mu_0$ die Permeabilitätskonstante bedeuten.

2. Verfahren zur Positionsmessung nach Anspruch 1, **dadurch gekennzeichnet, dass** als analytisch beschreibbares Magnetfeld (5) ein im Wesentlichen ideales Dipolfeld, vorzugsweise ein Feld eines Zylindermagneten (2) mit einem Verhältnis von Durchmesser zu Zylinderhöhe von in etwa 1:1, insbesondere ein Feld eines Kugelmagneten, vorgesehen ist.

3. Verfahren zur Positionsmessung mit einem Magneten (2) und mit einem die Magnetfeldstärke detektierenden Sensor (3), wobei der Magnet (2) und/oder der Sensor (3) mit einem beweglichen Element (4) zusammenwirkt, und wobei mittels des beweglichen Elementes (4) eine Relativbewegung zwischen dem Sensor (3) und dem Magneten (2) bewirkbar ist, derart dass die Position des beweglichen Elementes (4) entsprechend den Koordinaten (x, y, z) in einem Koordinatensystem aufgrund des vom Sensor (3) detektierten, vom Magneten (2) erzeugten Magnetfelds (5) feststellbar ist, wobei der Magnet (2) ein Magnetfeld (5) erzeugt, welches zumindest an einer, nicht zwischen dem Sensor (3) und dem Magneten (2) befindlichen Fläche (14) verzerrt, vorzugsweise abgeschirmt ist, und wobei der Sensor (3) die im Sensor (3) an einem Ort (7) wirkenden Komponenter der Magnetfeldstärke ($B_x$, $B_y$, $B_z$) des Magnetfeldes (5) in drei, linear unabhängige Raumrichtungen (6) feststellt, **dadurch gekennzeichnet, dass** in einem ersten Schritt jede Koordinate x, y, z entlang einer Koordinatenachse (6) des Koordinatensystems in einem Halbraum eines unverzerrten Magnetfelds (5) zu einem Anfangswert ($x_0$, $y_0$, $z_0$) festgesetzt wird, dass in einem zweiten Schritt ein Magnetfeldmodell aus einer in Bezug zu der die Verzerrung bewirkenden Fläche (14) flächensymmetrischen, insbesondere spiegelartigen, Anordnung von mindestens zwei unverzerrten Magnetfeldern (5,5') beschrieben wird und dass in einem dritten Schritt eine Positionsbestimmung im Magnetfeldmodell, ausgehend vom Anfangswert ($x_0$, $y_0$, $z_0$) durch iterative Kombination der von dem Sensor (3) erfassten Komponenten der Magnetfeldstärke ($B_x$, $B_y$, $B_z$) in allen Raumrichtungen (6) des Koordinatensystems und des Magnetfeldmodells ermittelt wird.

4.  Verfahren zur Positionsmessung nach Anspruch 3, **dadurch gekennzeichnet, dass** die Festsetzung jeder Koordinate x, y, z entlang einer Koordinatenachse (6) in einem Halbraum eines unverzerrten Magnetfelds (5) zu einem Anfangswert ($x_0$, $y_0$, $z_0$) frei gewählt wird.

5.  Verfahren zur Positionsmessung nach Anspruch 3 oder 4, **dadurch gekennzeichnet, dass** die Festsetzung jeder Koordinate x, y, z entlang einer Koordinatenachse (6) in einem Halbraum eines unverzerrten Magnetfelds (5) zu einem Anfangswert ($x_0$, $y_0$, $z_0$) nach einem Verfahren nach Anspruch 1, 2 oder 3 ermittelt wird.

6.  Verfahren zur Positionsmessung nach Anspruch 3, 4 oder 5, **dadurch gekennzeichnet, dass** das Magnetfeldmodell ein spiegelsymmetrisches Magnetfeld zweier im wesentlichen idealer Dipolfelder (5, 5'), gespiegelt an der mindestens einen die Verzerrung bewirkenden Fläche (14) und einseitig polinvertiert, ist.

7.  Verfahren zur Positionsmessung nach einem der Ansprüche 3 bis 6, **dadurch gekennzeichnet, dass** das Magnetfeldmodell eine Flächenkonstante ($\eta$) zur Berücksichtigung von Grenzflächeneffekten der mindestens einen die Verzerrung bewirkenden Fläche (14) umfasst.

8.  Verfahren zur Positionsmessung nach einem der Ansprüche 3 bis 7, **dadurch gekennzeichnet, dass** das Magnetfeldmodell wie folgt bestimmt ist:

$$\vec{B} = \begin{pmatrix} B_x \\ B_y \\ B_z \end{pmatrix} = \frac{\mu_0}{4\pi} \frac{3(\vec{p} \cdot \vec{r})\vec{r} - r^2 \vec{p}}{r^5} + \eta \frac{\mu_0}{4\pi} \frac{3(\vec{p} \cdot \vec{r}_S)\vec{r}_S - r_s^2 \vec{p}}{r_s^5}$$

wobei r = (x y z) der Positionsvektor für den Magneten (2), $r_s$ = ($x_s$ $y_s$ $z_s$) der Positionsvektor für den Spiegelmagneten (2') sowie $\eta$ die effektiv wirksame Permeabilität der die Verzerrung bewirkenden Fläche (14) und des dahinter liegenden Halbraumes bedeuten.

9.  Vorrichtung, insbesondere Vorrichtung in einem Metallgehäuse, vorzugsweise Wäschebehandlungsgerät, mit einem Gehäuse (10) und einer im Gehäuse (10) aufgehängten drehbaren Trommel (9), **dadurch gekennzeichnet, dass** die relative Position der Trommel (9) im Gehäuse (10) durch ein, nach einem der Ansprüche 1 bis 8 arbeitenden Verfahren ermittelt wird.

**Claims**

1.  Method for position measurement with a magnet (2) and with a sensor (3) detecting the magnetic field strength of the magnet (2), wherein the magnet (2) and/or the sensor (3) interacts with a movable element (4), wherein a relative movement is effected between the sensor (3) and the magnet (2) by means of the movable element (4), in such a way that the corresponding position of the movable element (4) can be detected with respect to the coordinates (x, y, z) in a coordinate system by means of the sensor (3) detecting the magnetic field (5) generated by the magnet (2), wherein the magnet (2) generates an analytically describable magnetic field (5), and wherein the sensor (3) determines the components of the magnetic field strength ($B_x$, $B_y$, $B_z$) of the magnetic field (5) acting at a location (7) in the sensor (3) in three linearly independent spatial directions (6), wherein each coordinate x, y, z is individually and clearly detected along a coordinate axis (6) of the coordinate system in a half-space of the magnetic field (5) by the combination of the components of the magnetic field strength ($B_x$, $B_y$, $B_z$) detected by the sensor (3) in all spatial directions (6) of the coordinate system, **characterised in that** the coordinates (x, y, z) are described by a quotient relationship between the magnetic field strength ($B_x$, $B_y$, $B_z$) corresponding to the respective coordinate axis (6), a magnetic field magnitude $B_0$ dependent on the location, and a constant system magnitude, wherein the system magnitude comprises the magnetic permeability constant and the dipole moment of the magnet (2) as well as the magnetic field magnitude $B_0$ comprises a component ($B_x$, $B_y$, $B_z$) in a spatial direction (6) and the amount of the magnetic field strength, wherein the coordinates are determined as follows:

$$x = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}}\frac{1}{3}\frac{B_x}{B_0} \qquad y = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}}\frac{1}{3}\frac{B_y}{B_0} \qquad z = \sqrt[3]{\frac{M_0}{B_0}}\sqrt{\frac{1}{3}\left(\frac{B_z}{B_0}+1\right)}$$

wherein

$$B_0 = \frac{-B_z + \sqrt{B_z^2 + 8B^2}}{4} \qquad\qquad B^2 = B_x{}^2 + B_y{}^2 + B_z{}^2 \qquad\qquad M_0 = \frac{\mu_0 p_z}{4\pi}$$

and wherein $p_z$ represents the dipole moment of the magnet (2) while $\mu_0$ represents the permeability constant.

2. Method for position measurement according to claim 1, **characterised in that** a substantially ideal dipole field, preferably a field of a cylindrical magnet (2) having a ratio of diameter to cylinder height of approximately 1: 1, in particular a field of a ball magnet, is provided as an analytically describable magnetic field (5).

3. Method for position measurement with a magnet (2) and with a sensor (3) detecting magnetic field strength, wherein the magnet (2) and/or the sensor (3) interacts with a movable element (4), and wherein a relative movement between the sensor (3) and the magnet (2) is effected by means of the movable element (4), in such a way that the position of the movable element (4) corresponding to the coordinates (x, y, z) in a coordinate system can be determined on the basis of the magnetic field (5) generated by the magnet (2) and detected by the sensor (3), wherein the magnet (2) generates a magnetic field (5) which is distorted at least one surface that is not located between the sensor (3) and the magnet (14) and that is preferably shielded, and wherein the sensor (3) detects the components of the magnetic field strength ($B_x$, $B_y$, $B_z$) of the magnetic field (5) acting at a location (7) in the sensor (3) in three linearly independent spatial directions (6), **characterised in that**, in a first step, each coordinate x, y, z is determined along a coordinate axis (6) of the coordinate system in a half-space of an undistorted magnetic field (5) at an initial value ($x_0$, $y_0$, $z_0$), and that, in a second step, a magnetic field model of a surface-symmetrical, in particular mirror-like, arrangement of at least two undistorted magnetic fields (5,5') is described with respect to the distortion-causing surface (14), and that, in a third step, a position in the magnetic field model is determined, starting from the initial value ($x_0$, $y_0$, $z_0$), through iterative combination of components of the magnetic field strength ($B_x$, $B_y$, $B_z$) detected by the sensor (3) in all spatial directions (6) of the coordinate system and the magnetic field model.

4. Method for position measurement according to claim 3, **characterised in that** the determination of each coordinate x, y, z along a coordinate axis (6) in a half-space of an undistorted magnetic field (5) is freely selected at an initial value ($x_0$, $y_0$, $z_0$).

5. Method for position measurement according to claim 3 or 4, **characterised in that** the determination of each coordinate x, y, z along a coordinate axis (6) in a half-space of an undistorted magnetic field (5) at an initial value ($x_0$, $y_0$, $z_0$) is determined according to a method of claim 1, 2 or 3.

6. Method for position measurement according to claim 3, 4 or 5, **characterised in that** the magnetic field model is a mirror-symmetrical magnetic field of two substantially ideal dipole fields (5,5'), reflected at the at least one distortion-causing surface (14) and pole-inverted at one side.

7. Method for position measurement according to one of the claims 3 to 6, **characterised in that** the magnetic field model comprises a surface constant ($\eta$) to take into account boundary surface effects of the at least one distortion-causing surface (14).

8. Method for position measurement according to one of the claims 3 to 7, **characterised in that** the magnetic field model is determined as follows:

$$\vec{B} = \begin{pmatrix} B_x \\ B_y \\ B_z \end{pmatrix} = \frac{\mu_0}{4\pi} \frac{3(\vec{p} \cdot \vec{r})\vec{r} - r^2 \vec{p}}{r^5} + \eta \frac{\mu_0}{4\pi} \frac{3(\vec{p} \cdot \vec{r}_s)\vec{r}_s - r_s^2 \vec{p}}{r_s^5}$$

where r = (x y z) represents the position vector for the magnets (2), $r_s = (x_s \, y_s \, z_s)$ represents the position vector for the mirror magnets (2'), and $\eta$ represents the effective permeability of the distortion-causing surface (14) and the underlying half-space.

9. Apparatus, in particular apparatus in a metal housing, preferably a laundry treatment appliance, **characterised by** a housing (10) and a rotatable drum (9) suspended in the housing (10), **characterised in that** the relative position of the drum (9) in the housing (10) is determined by a method according to one of the claims 1 to 8.

**Revendications**

1. Procédé pour la mesure de position avec un aimant (2) et avec un capteur (3) détectant l'intensité du champ magnétique de l'aimant (2), l'aimant (2) et/ou le capteur (3) interagissant avec un élément mobile (4), un mouvement relatif entre le capteur (3) et l'aimant (2) pouvant être provoqué à l'aide de l'élément mobile (4), de façon à ce que la position de l'élément mobile (4) puisse être déterminée en fonction des coordonnées (x, y z) dans un système de coordonnées sur la base du champ magnétique (5) généré par l'aimant (2) et détecté par le capteur (3), l'aimant (2) générant un champ magnétique (5) pouvant être décrit de manière analytique et le capteur (3) déterminant les composantes de l'intensité de champ magnétique ($B_x$, $B_y$, $B_z$) du champ magnétique (5) agissant à un endroit (7) dans le capteur (3) dans trois directions spatiales (6) linéaires indépendantes, chaque coordonnée x, y, z étant déterminée individuellement le long d'un axe de coordonnée (6) du système de coordonnées dans un demi-espace du champ magnétique (5) et de manière univoque par la combinaison des composantes de l'intensité du champ magnétique ($B_x$, $B_y$, $B_z$) dans toutes les directions spatiales (6) du système de coordonnées et étant **caractérisé en ce que** les coordonnées (x, y, z) sont décrites à partir d'une relation de quotient entre l'intensité de champ magnétique ($B_x$, $B_y$, $B_z$) correspondant à l'axe de coordonnée (6) d'une grandeur de champ magnétique $B_0$ dépendant du lieu et d'une grandeur de système constante, la grandeur de système comprenant la constante de perméabilité et le moment dipolaire de l'aimant (2) et la grandeur de champ magnétique $B_0$ comprenant une composante ($B_x$, $B_y$, $B_z$) dans une direction spatiale (6) et le montant de l'intensité du champ magnétique, les coordonnées étant déterminées comme suit :

$$x = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}} \frac{1}{3}\frac{B_x}{B_0} \qquad y = \frac{\sqrt[3]{\frac{M_0}{B_0}}^2}{\sqrt[3]{\frac{M_0}{B_0}}\sqrt{\frac{1}{3}\left(\frac{B_z}{B_0}+1\right)}} \frac{1}{3}\frac{B_y}{B_0} \qquad z = \sqrt[3]{\frac{M_0}{B_0}}\sqrt{\frac{1}{3}\left(\frac{B_z}{B_0}+1\right)}$$

cependant

$$B_0 = \frac{-B_z + \sqrt{B_z^2 + 8B^2}}{4} \qquad\qquad B^2 = B_x^2 + B_y^2 + B_z^2 \qquad\qquad M_0 = \frac{\mu_0 p_z}{4\pi}$$

et $p_z$ étant le moment dipolaire de l'aimant (2) et $\mu 0$ la constante de perméabilité.

**2.** Procédé de mesure de position selon la revendication 1, **caractérisé en ce que** le champ magnétique (5) pouvant être décrit de manière analytique est un champ dipolaire globalement idéal, de préférence un champ d'un aimant cylindrique (2) avec un rapport entre le diamètre et la hauteur d'environ 1:1, plus particulièrement un champ d'un aimant sphérique.

**3.** Procédé de mesure de position avec un aimant (2) et avec un capteur (2) détectant l'intensité du champ magnétique, l'aimant (2) et/ou le capteur (3) interagissant avec un élément mobile (4) et un mouvement relatif entre le capteur (3) et l'aimant (2) pouvant être provoquée à l'aide de l'élément mobile (4), de façon à ce que la position de l'élément mobile (4) puisse être déterminée en fonction des coordonnées (x, y z) dans un système de coordonnées sur la base du champ magnétique (5) généré par l'aimant (2) et détecté par le capteur (3), l'aimant (2) générant un champ magnétique (5) qui est distordu, de préférence blindé, au moins au niveau d'une surface (14) ne se trouvant pas entre le capteur (3) et l'aimant (2), et le capteur (3) déterminant les composantes de l'intensité de champ magnétique $(B_x, B_y, B_z)$ du champ magnétique (5) agissant à un endroit (7) dans le capteur (3) dans trois directions spatiales (6) linéaires indépendantes, **caractérisé en ce que**, dans une première étape, chaque coordonnée x, y, z est déterminée le long d'un axe de coordonnée (6) du système de coordonnées dans un demi-espace d'un champ magnétique (5) non distordu, à une valeur initiale $(x_0, y_0, z_0)$, **en ce que**, dans une deuxième étape, un modèle de champ magnétique est décrite à partir d'une disposition symétrique, plus particulièrement en miroir, par rapport à la surface (14) provoquant la distorsion, d'au moins deux champs magnétiques (5, 5') non distordus et **en ce que**, dans une troisième étape, la détermination de la position est effectuée, dans le modèle de champ magnétique, à partir de la valeur initiale $(x_0, y_0, z_0)$, par une combinaison itérative des composantes de l'intensité du champ magnétique $(B_x, B_y, B_z)$ déterminées par le capteur (3) dans toutes les directions spatiales (6) du système de coordonnées et du modèle de champ magnétique.

**4.** Procédé de mesure de position selon la revendication 3, **caractérisé en ce que** la détermination de chaque coordonnée x, y, z est choisie librement le long d'un axe de coordonnée (6) dans un demi-espace d'un champ magnétique (5) non distordu, à une valeur initiale $(x_0, y_0, z_0)$.

**5.** Procédé de mesure de position selon la revendication 3 ou la revendication 4, **caractérisé en ce que** la détermination de chaque coordonnée x, y, z est efffectuée le long d'un axe de coordonnée (6) dans un demi-espace d'un champ magnétique (5) non distordu, à une valeur initiale $(x_0, y_0, z_0)$ selon un procédé selon la revendication 1, 2 ou 3.

**6.** Procédé de mesure de position selon la revendication 3, 4 ou 5, **caractérisé en ce que** le modèle de champ magnétique est un champ magnétique à symétrie en miroir constitué de deux champs dipolaires (5, 5') globalement idéaux, disposés en miroir au niveau de l'au moins une surface (14) provoquant la distorsion et dont les pôles sont inversés d'un côté.

**7.** Procédé de mesure de position selon l'une des revendications 3 à 6, **caractérisé en ce que** le modèle de champ magnétique comprend une constante de surface ($\eta$) pour la prise en compte d'effets de surfaces limites de l'au moins une surface (14) provoquant la distorsion.

**8.** Procédé de mesure de position selon l'une des revendications 3 à 7, **caractérisé en ce que** le modèle de champ magnétique est déterminé comme suit :

$$\vec{B} = \begin{pmatrix} B_x \\ B_y \\ B_z \end{pmatrix} = \frac{\mu_0}{4\pi} \frac{3(\vec{p} \cdot \vec{r})\vec{r} - r^2 \vec{p}}{r^5} + \eta \frac{\mu_0}{4\pi} \frac{3(\vec{p} \cdot \vec{r}_s)\vec{r}_s - r_s^2 \vec{p}}{r_s^5}$$

r = (x, y, z) étant le vecteur de position pour l'aimant (2), $r_s = (x_s, y_s, z_s)$ étant le vecteur de position pour l'aiment en miroir (2') et $\eta$ étant la perméabilité effective de la surface (14) provoquant la distorsion et du demi-espace situé derrière.

**9.** Dispositif, plus particulièrement dispositif dans un boîtier métallique, de préférence appareil de traitement de linge, avec un boîtier (10) et un tambour (9) rotatif suspendu dans le boîtier (10), **caractérisé en ce que** la position relative du tambour (9) dans le boîtier (10) est déterminée par un procédé fonctionnant selon l'une des revendications 1 à 8.

Fig. 1

Fig. 2

EP 2 534 449 B1

Fig. 3

Fig. 4

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008024103 A1
- DE 102005009381 A1
- DE 102007008155 A1
- US 20090217711 A1
- US 20070167703 A1